Europäisches Patentamt

European Patent Office

Office européen des brevets

(11) Veröffentlichungsnummer: **0 243 845 B1**

(12) **EUROPÄISCHE PATENTSCHRIFT**

(45) Veröffentlichungstag der Patentschrift: 29.05.91

(51) Int. Cl.⁵: **B01J 8/34**, C01B 31/10, //C01B17/77

(21) Anmeldenummer: 87105819.4

(22) Anmeldetag: 21.04.87

(54) Wirbelbett zur Durchführung von Gas-Feststoffreaktionen.

(30) Priorität: 02.05.86 DE 3614900

(43) Veröffentlichungstag der Anmeldung:
04.11.87 Patentblatt 87/45

(45) Bekanntmachung des Hinweises auf die
Patenterteilung:
29.05.91 Patentblatt 91/22

(84) Benannte Vertragsstaaten:
BE DE ES FR GB IT NL SE

(56) Entgegenhaltungen:
US-A- 2 533 026
US-A- 3 169 835
US-A- 3 429 654

CHEMICAL ABSTRACTS, Band 96, Nr. 22, Mai
1982, Seite 133, Zusammenfassung Nr.
183294y, Columbus, Ohio, US; & JP-A-82 02
050 (MITSUI ENGINEERING & SHIPBUILDING
CO., LTD) 13-01-1982

Idem

(73) Patentinhaber: **BAYER AG**

**W-5090 Leverkusen 1 Bayerwerk(DE)**

(72) Erfinder: **Metzger, Karl-Ludwig, Dr.**
**Roggendorfstrasse 49**
**W-5000 Köln 80(DE)**
Erfinder: **Keller, Wolfgang, Dipl.-Ing.**
**Frenserstrasse 19a**
**W-5010 Bergheim 3(DE)**
Erfinder: **Becker, Wolf, Dr.**
**An den Buchen 30**
**W-5000 Köln 80(DE)**
Erfinder: **Block, Hans-Dieter, Dr.**
**Biesenbach 49**
**W-5090 Leverkusen 3(DE)**
Erfinder: **Thom, Karl-Friedrich, Dr.**
**Krahnenstrasse 3-5**
**W-5000 Köln 80(DE)**

## Beschreibung

Die vorliegende Erfindung betrifft ein verbessertes Wirbelbett mit Einbauten zur Durchführung von Gas-Feststoffreaktionen.

Es ist hinreichend bekannt, daß sich einige Reaktionen zwischen Gasen und Feststoffen besonders vorteilhaft in Wirbelschichten durchführen lassen. Beispiele für solche Reaktionen sind die katalytische Oxidation von $SO_2$ zu $SO_3$ bei der Schwefelsäureherstellung, die Crackprozesse in der Petrochemie, Redoxprozesse zur Einstellung eines einheitlichen Oxidationszustandes feinteiliger Feststoffe, Trocknungsprozesse, die Herstellung von Aktivkohle, Trocknung feinteiliger Feststoffe.

Bei Gas-Feststoff-Wirbelschichtreaktoren wird die Feststoffschüttung von dem Fluidisationsgas (im weiteren mit Gas bezeichnet) durchströmt.

Forderungen, die an eine Reaktion im Wirbelbett gestellt werden, sind ein hoher Kontakt zwischen Gas und Feststoff, somit eine effektive Ausnutzung des Gases, eine enge Gasverweilzeitverteilung, geringer Feststoffabrieb und ein geringer Werkstoffverschleiß. Bei Wirbelbetten mit kontinuierlichem Feststoffaustrag wird auch ein enges Verweilzeitspektrum der Partikel gefordert. Im Idealfall soll jedes Feststoffteil die gleiche Behandlung erfahren.

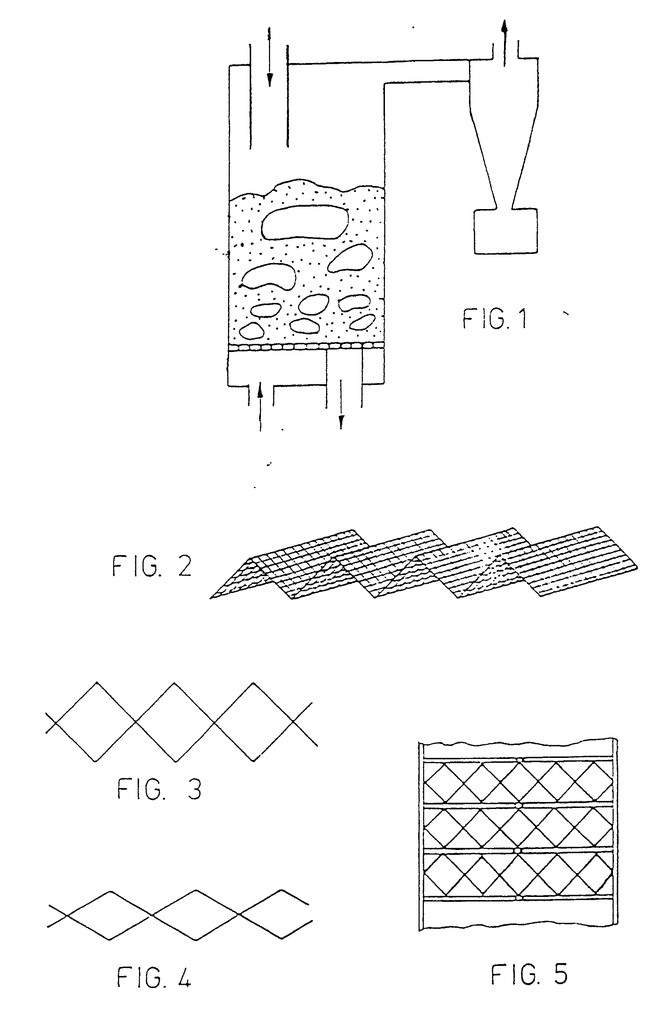

Bei herkömmlichen Wirbelschichtreaktoren durchströmt nur ein Teil des Gases die sogenannte Suspensionsphase der Wirbelschicht (Fig. 1) während der andere, häufig erheblich größere Teil, die Wirbelschicht in Form von feststofffreien Blasen passiert.

In vielen Teilen durchströmt das Blasengas den Reaktor erheblich schneller als das Gas in der Suspensionsphase.

Als Folge der durch die Blasen bewirkten heftigen Feststoffbewegung in der Wirbelschicht entstehen unerwünschter Feststoffabrieb, Werkstoffverschleiß und erhebliche mechanische Beanspruchung des Wirbelschichtbehälters, der Halterung des Wirbelschichtbehälters, angeschlossener Rohrleitungen und der Gebäude. Die genannten Nachteile treten vorwiegend bei vergleichsweise großen Blasen auf, während kleine Blasen oft erwünscht sind, um durch mäßige Feststoffbewegung in der Wirbelschicht einen guten Wärmeübergang von Wirbelschicht zu Behälterwand zu erzielen.

Die Problematik soll im folgenden am Beispiel der Aktivkohle, stellvertretend für andere geeignete Feststoffe dargestellt werden.

Ein indirekt beheiztes Wirbelbett ist gut geeignet für die Umsetzung von C mit $H_2O$ zu $H_2$ + CO. Hält man verschiedene Bedingungen ein, dann kann man im Wirbelbett Aktivkohle herstellen.

Hierbei ist es von besonderer Wichtigkeit, daß das eingesetzte Rohprodukt in seiner Gesamtheit die gleiche Behandlung erfährt. Um ein einheitliches qualitativ hochwertiges Produkt erhalten zu können, ist es erforderlich, daß die Einzelteilchen eine definierte Verweilzeit, in der Praxis aber ein enges definiertes Verweilzeitspektrum aufweisen.

Als Wirbelgas dient bei der Aktivkohle-Herstellung der für die Reaktion nötige Wasserdampft oder ein Wasserdampf-Inertgas-Gemisch. Um einen möglichst großen Produktumsatz zu erreichen, muß der Wirbelbettreaktor bestimmte Abmessungen aufweisen. Diese werden mitbestimmt durch die Tatsache, daß das Wirbelbett indirekt beheizt werden und eine Wärmezufuhr zu den Einzelteilchen gewährleistet sein muß.

Bei einer Erweiterung eines Wirbelbettes vergrößert sich das Fassungsvolumen und somit das im Wirbelbett befindliche Material naturgemäß schneller als die beheizbare Oberfläche. Dadurch bedingt wird auch die Verweilzeit der Einzelteilchen größer, auch wird eine deutliche Verbreiterung des Verweilzeitspektrums beobachtet.

Die Folge ist ein erhöhter Abrieb und ein uneinheitliches Material. Auch sind bei Wirbelbetten von 3 bis 5 m Höhe Gasblasen von bis zu 50 cm Durchmesser festzustellen. Diese größenteils aus Wasserdampf bestehenden Blasen wandern durch das Fließbett, ohne daß sie mit den Kohleteilchen in Berührung gekommen sind. Für die Reaktion

$$C + H_2O \rightarrow CO + H_2$$

muß also eine Überschußmenge an Wasserdampf eingesetzt werden, den man als Verlustdampf bezeichnet.

Weiterhin bewirken diese Blasen, daß größere Mengen an Kohleteilchen aus der Bettoberfläche herausgeschleudert werden. Außerdem finden im Innern des Bettes starke Bewegungen statt, die sowohl die Kohleteilchen stark beanspruchen als auch unterschiedliche Verweilzeiten bedingen.

Die Aufgabe dieser Erfindung besteht darin, ein Verfahren sowie eine Vorrichtung für die Durchführung von Gas-Feststoffreaktionen im Wirbelbett zur Verfügung zu stellen, die die geschilderten Nachteile bekannter Verfahren und Vorrichtungen nicht aufweisen.

EP 0 243 845 B1

Es ist aus US-A 2 533 026 bekannt, daß man durch Schüttungen von Einzelfüllkörpern, die in die Wirbelschicht eingebracht werden eine Reduzierung der Blasengröße bewirken kann. Solche Einzelfüllkörper verdrängen ein großes Volumen (kompakte oder geschlossene Füllkorper)` und/oder neigen zum Ortswechsel oder zur Umschichtung und/oder sind insbesondere bei hohen Wirbelschichttemperaturen (nachlassende Werkstoffestigkeit) nicht stabil genug, um die Belastung durch das Eigengewicht der Füllkörperschüttung ohne Verformung aufzunehmen. Außerdem müssen solche Füllkörper in der Regel einzeln in den Wirbelschichtbehälter ein- und ausgetauscht werden. Beim Einschütten der Einzelfüllkörper in den Wirbelschichtbehälter ergeben sich häufig unkontrollierte, unregelmäßige Packungsstrukturen der Füllkörperschicht. Das Einschichten von Einzelfüllkörpern zur Vermeidung dieser unregelmäßigen Packungsstrukturen ist sehr arbeitsintensiv und zeitaufwendig. Außerdem ist nicht sichergestellt, daß durch die Feststoffbewegung in der Wirbelschicht sich eine geordnete Packung aus Einzelfüllkörpern nicht während des Betriebs unvorteilhaft verändert (Umschichtung, Verformung). Das Entnehmen von Einzelfüllkörpern aus der Wirbelschicht ist sehr aufwendig. Es muß z.B. der gesamte Wirbelschichtfeststoff aus dem Wirbelschichtbehälter entfernt werden bevor die Einzelfüllkörper entnommen werden können.

In JP-A-82 02 050 wird ein Wirbelbettreaktor beschrieben, in dem einige perforierte Trennungswände vertikal mit gleichen Abständen zwischen den benachbarten Einrichtungen angeordnet sind. Ihre unteren Enden sind räumlich über einem perforierten plattenförmigen Verteiler angeordnet und das obere Ende der Wände liegt unterhalb des Wirbelbettendes.

Blasenbildung soll dadurch verhindert werden und damit die Konvertierung erhöht werden.

Aus der US-Patentschrift 3,169,835 sind Wirbelbetteinbauten bekannt, die aus horizontal angeordneten flachen, grobmaschigen Drahtgittern bestehen, wobei die einzelnen Drahtgitter dicht übereinander im Wirbelbett waagerecht und parallel zueinander angeordnet sind. In einer besonderen Ausführungsform werden die Drahtgitter so eingebuat, daß die Löcher bzw. die Drahtstege benachbarter Gitter bei der Projektion auf eine Ebene nicht zur Deckung kommen, sondern gegeneinander verschoben sind. Zusätzlich können Füllkörper verwendet werden.

Bei beiden oben erwähnten Einbauten hat sich jedoch gezeigt, daß der Gas-Feststoff-Kontakt nur ungenügend ist und daß weiterhin erhebliche Gasblasenbildung auftritt.

Überraschenderweise wurden Einbauten in der Wirbelschicht gefunden, die diese Nachteile nicht aufweisen und die die Aufgabe der Durchführung von Gas-Feststoffreaktionen im Wirbelbett ohne die durch zu große Phasen bewirkten Nachteile in hervorragender Weise erledigen.

Gegenstand der vorliegenden Erfindung ist ein Wirbelbett mit Einbauten zur Durchführung von Gas-Feststoffreaktionen, welches dadurch gekennzeichnet ist, daß die einzeleinbauten jeweils derart geformt sind, daß die jeweils Durchtrittsfläche der einzelnen Einbauten in Strömungsrichtung kleiner ist als die Summe der Flächen der Öffnungen, und daß die einzelnen Einbauten waagerecht oder gegen die Horizontale geneigt sind.

Bevorzugte Materialien für die erfindungsgemäßen Einbauten sind perforierte Platten und/oder Gewebe. Diese werden speziell geformt (z.B. gebogen, gefaltet, geknickt) einzeln oder in Paketen derart in die Wirbelschicht eingebracht, daß sie den gesamten Wirbelschichtquerschnitt überdecken. Durch die spezielle Formung der Platten wird erreicht, daß die Abdeckung in vertikaler Richtung (Strömungsrichtung des Gases), die die Zerstörung von Blasen bewirkt, deutlich höher ist als die Abdeckung in horizontaler Richtung. Dadurch wird es möglich, grobmaschige Platten zu verwenden, die trotz guter Blasenzerstörung eine nahezu ungehinderte Quer-Feststoffbewegung zulassen, die vor allem dann von maßgebender Bedeutung ist, wenn Wärme über die Reaktorwand zu- oder abgeführt wird. Die grobmaschige Ausführung der Platten bewirkt zusätzlich geringes Gewicht und geringe Verstopfungsgefahr. Als Beispiel einer erfindungsgemäßen Platte ist in Fig. 2 ein zick-zack-förmig geknicktes Drahtgittergewebe dargestellt. Durch die spezielle Form ist die Platte stabiler als z.B. ein horizontales, flaches Drahtgittergewebe und kann deshalb bis zu großen Wirbelschichtdurchmessern freitragend gebaut werden.

Bei vorgegbener Maschenweite kann durch den Abknickwinkel eines zick-zack-förmigen Drahtgittergewebes die vertikale Abdeckung den Feststoffeigenschaften angepaßt werden.

Eine besondere erfindungsgemäße Ausführungsform des Wirbelbettes besteht darin, daß die Einbauten die gesamte oder den größten Teil der Wirbelhettquerschnittfläche überdecken.

Durch Aneinanderlegen von zwei Platten können Gitterkörper gebildet werden (Fig. 3 und 4), die große Hohlräume zwischen den Platten aufweisen und eine ungehinderte Querbewegung des Feststoffs ermöglichen. Die Ausführungsform, gemäß der die Einbauten zu Gitterkörpern vereinigt sind, ist somit besonders effektiv.

Beim Einschichten in die Wirbelschicht können die Gitterkörper in der Horizontalen gegeneinander gedreht werden, so daß eine optimale Querbewegung des Feststoffes erteicht wird.

Eine weitere vorteilhafte Ausführungsform der Erfindung besteht darin, daß die Einbauten an einem

EP 0 243 845 B1

Trägergerüst befestigt sind. Ein solches Trägergerüst trägt die einzelnen Platten bzw. Gitterkörper und nimmt somit deren Eigengewicht auf.

Durch dieses Tragegerüst werden die Gitterkörper weitestgehend mechanisch entlastet und können ohne einschränkende Festigkeitsgesichtspunkte ausschließlich auf die Funktion z.B. der Blasenzerstörung ausgelegt werden. Die hohe Eigenstabilität und das geringe Gewicht der Gitterkörper erfordern nur ein Tragegerüst mit außerordentlich geringer Volumenverdrängung. Durch die Entlastung der Gitterkörper kann man häufig bei höheren Wirbelschichttemperaturen auf den Einsatz von teueren Werkstoffen für die Gitterkörper verzichten. Fig. 5 zeigt drei Langen von Gitterkörpern im Wirbelbett.

Ein weiterer Vorteil der erfindungsgemäßen Einrichtung ist, daß die Packungsstruktur eindeutig und optimal festgelegt werden kann, sich während des Betriebs weder durch Bewegung noch Verformung ändert und daß sich die gesamte Packung bei mit Feststoff gefülltem Wirbelschichtbehälter ein- und ausbauen läßt.

Durch die Verwendung des Traggerüstes kann sich der Abstand zwischen den Platten bzw. den Gitterkörpern in weitem Bereich ändern, so daß die Wirbelschicht in Bereiche mit bzw. ohne Packung oder in Bereiche unterschiedlicher Packungsdichte eingeteilt werden kann.

Weiterhin kann es vorteilhaft sein, daß die Einbauten mit Füllkörpern gefüllt sind. Durch Einbringen zusätzlicher Verdrängungskörper in die Hohlräume der Einbauten gelingt es gleichzeitig die Feststoffverweilzeit im Wirbelschichtreaktor unter Beibehaltung der Wirbelschichthöhe frei einzustellen und wesentlich zu reduzieren.

Insbesondere kann die Verweilzeitverteilung des Gases eingeengt und durch Verminderung der Blasengröße der Gasaustausch zwischen Blase und Suspension erhöht werden.

Hierdurch ergibt sich ein verbesserter Gas-Feststoff-Kontakt und dadurch ein gesteigerter Umsatz.

Das erfindungsgemäße Wirbelbett ist hervorragend geeignet zur Durchführung von oxidativen, katalytischen und/oder thermischen Gas-Feststoffreaktionen. Aber auch andere Gas-Feststoffreaktionen sind vorteilhaft durchführbar im erfindungsgemäßen Wirbelbett.

Durch den Einsatz des erfindungsgemäßen Wirbelbettes wird auch der blasenbedingte Feststoffauswurf an der Wirbelbettoberfläche erheblich vermindert. So konnte in einer Wirbelschichtanlage mit einer Wirbelschichthöhe von ca. 1,5 m bei gleicher Gasgeschwindigkeit die Feststoffauswurfhöhe von ca. 2,6 m durch die Einbauten auf weniger als 0,4 m reduziert werden. Hierdurch wird die Verweilzeitverteilung des Feststoffs in der Wirbelschicht eingeengt und der dem Reaktor nachgeschaltete Feststoffabscheider entlastet. Außerdem kann die Bauhöhe des Wirbelbettbehälters reduziert werden. Wegen der geringeren Feststoffbewegung in der Wirbelschicht werden auch der Feststoffabrieb und der Werkstoffverschleiß vermindert.

Besonders geeignet ist das erfindungsgemäße Wirbelbett zur Durchführung des Verfahrens zur Herstellung von Aktivkohle. Im folgenden wird dies näher erläutert.

Die Einbauten bewirken eine Zerstörung der entstehenden Blasen. Das Wirbelbett wird gleichmäßiger und die starke Beanspruchung der gewirbelten Kohle erheblich geringer.

Es entsteht ein homogeneres Wirbelbett ohne große Gasblasen. Ein weiterer Vorteil ist eine gleichmäßigere Wirbelbettoberfläche, die nicht durch die ohne Einbauten vorhandenen eruptiven Gasblasen mit Kohle in ihrer Höhe schwankt.

Stellt man Aktivkohle im erfindungsgemäßen Wirbelbett her, hat dies gegenüber einer Herstellung im normalen Wirbelbett folgende Vorteile:
Weniger $H_2O$-Verbrauch,
weniger Abrieb,
ein gleichmäßigeres Produkt,
höhere Ausbeuten,
erhebliche Verringerung der mechanischen Belastung der Wirbelschichtanlagen durch blasenbedingte Erschütterungen.

Im folgenden wird die Erfindung beispielhaft erläutert.

Beispiel 1

Das Beispiel zeigt die Wirkung der Einbauten auf die Blasengröße und das Auswurfverhalten.

Feststoff:    Braunkohlenkoks
              Partikelgröße 0,3 mm < d < 3 mm
              Dichte $\delta_s \sim 600$ kg/m$^3$

4

| | Wirbelgas: | Luft bei Umgebungsbedingungen |
| | | Luftgeschwindigkeit im Leerrohr v = 1 m/s |
| | Wirbelbett: | Betthöhe (undurchströmt) H = 1,2 m |
| | | Bettdurchmesser D = 600 mm |
| | Einbauten: | Übereinandergeschichtete Gitterkörper |

Wirbelgas:    Luft bei Umgebungsbedingungen
              Luftgeschwindigkeit im Leerrohr v = 1 m/s
Wirbelbett:   Betthöhe (undurchströmt) H = 1,2 m
              Bettdurchmesser D = 600 mm
Einbauten:    Übereinandergeschichtete Gitterkörper
              (Drahtstärke 4 mm, lichte Maschenweite
              32 x 32 mm) nach Fig. 3
              Höhe der Einbauten $H_E$ = 2,2 m
              Benachbarte Gitterkörper jeweils um 90° C
              in der Horizontalen gedreht.

Die Ergebnisse sind der folgenden Tabelle zu entnehmen.

## Tabelle

| | ohne Einbauten | mit Einbauten |
|---|---|---|
| Wirbelbetthöhe | 1,2 m | 1,5 m |
| Spritzkornhöhe | 2,6 m | < 0,4 m |
| Feststoffantrag | 11 kg/h | 1,2 kg/h |
| ausgetragener Feinanteil < 5 µm | 3,9 kg/h | 0,26 kg/h |
| max. Blasengröße | ~ 500 mm | < 150 mm |

Beispiel 2

In den Wirbelschichtreaktor gemäß Beispiel 1 wird Braunkohlenschwelkoks (1 <d<4 mm) kontinuierlich eingetragen und mit Wasserdampf bei einer Aktivierungstemperatur zwischen 800 bis 900° C fluidisiert. In der folgenden Tabelle wird der Vorteil der Einbauten in den Wirbelschichtreaktor verdeutlicht:

## Tabelle

| | ohne Einbauten | mit Einbauten |
|---|---|---|
| Durchsatz (kg/h) | 925 | 1300 |
| Dampf (kg/h) | 1200 | 1300 |
| Aktivierungstemperatur ($^{\circ}$C) | 860 | 820 |
| Manteltemperatur ($^{\circ}$C) | 1060 | 1040 |
| Vergasungsanalyse (%) | | |
| $H_2$ | 36 | 41 |
| $CO_2$ | 20 | 27 |
| CO | 10 | 11 |
| $H_2O$ | 34 | 21 |
| Aktivkohle (%) Ausbeute | 55 | 64 |
| davon Staub, bezogen auf Einsatzmaterial (%) | 12 | 4 |

## Ansprüche

1. Wirbelbett mit Einbauten zur Durchführung von Gas-Feststoffreaktionen, dadurch gekennzeichnet, daß die einzelnen Einbauten jeweils derart geformt sind, daß die jeweilige Durchtrittsfläche der einzelnen Einbauten in Strömungsrichtung kleiner ist als die Summe der Fläche der Öffnungen, und daß die einzelnen Einbauten waagerecht oder gegen die Horizontale geneigt sind.

2. Wirbelbett gemäß Anspruch 1, dadurch gekennzeichnet, daß die einzelnen Einbauten jeweils gebogen, gefaltet oder geknickt sind.

3. Wirbelbett gemäß einem der Ansprüche 1 oder 2, dadurch gekennzeichnet, daß die Einbauten ausgeformten perforierten Platten und/oder Geweben bestehen.

4. Wirbelbett gemäß einem der Ansprüche 1 bis 3, dadurch gekennzeichnet, daß die Einbauten die gesamte oder den größten Teil der Wirbelbettquerschnittsfläche überdecken.

5. Wirbelbett gemäß einem der Ansprüche 1 bis 4, dadurch gekennzeichnet, daß die Einbauten zu Gitterkörpern vereinigt sind.

6. Wirbelbett gemäß einem der Ansprüche 1 bis 5, dadurch gekennzeichnet, daß die Einbauten an einem Trägergerüst befestigt sind.

7. Wirbelbett gemäß einem der Ansprüche 1 bis 6, dadurch gekennzeichnet, daß die Einbauten mit Füllkörpern gefüllt sind.

8. Verwendung des Wirbelbetts nach einem oder mehreren der Ansprüche 1 bis 7 zur Durchführung von oxidativen, katalytischen und/oder thermischen Gas-Feststoffreaktionen.

9. Verwendung des Wirbelbetts gemäß Anspruch 8 zur Durchführung des Verfahrens zur Herstellung von Aktivkohle.

**Claims**

1. Fluidized bed with baffles for carrying out gas-solid reactions, characterized in that the individual baffles are in each case so formed that the respective area for passage of the individual baffles in the flow direction is smaller than the total area of the openings and that the individual baffles are horizontal or inclined to the horizontal.

2. Fluidized bed according to claim 1, characterized in that the individual baffles are each curved, folded or bent.

3. Fluidized bed according to one of claims 1 or 2,
   characterized in that the baffles consist of shaped perforated sheets and/or cloths.

4. Fluidized bed according to one of claims 1 to 3,
   characterized in that the baffles cover the whole or the greatest part of the fluidized bed cross-sectional area.

5. Fluidized bed according to one of claims 1 to 4,
   characterized in that the baffles are combined into lattice bodies.

6. Fluidized bed according to one of claims 1 to 5,
   characterized in that the baffles are fastened to a supporting framework.

7. Fluidized bed according to one of claims 1 to 6,
   characterized in that the baffles are filled with packing bodies.

8. Use of the fluidized bed according to one or more of claims 1 to 7 for carrying out oxidative, catalytic and/or thermal gas-solid reactions.

9. Use of the fluidized bed according to claim 8 for carrying out the process for production of active carbon.

**Revendications**

1. Lit fluidisé avec des structures incorporées pour l'exécution de réactions entre gaz et matières solides, caractérisé en ce que les structures incorporées individuelles sont formées de telle manière que la surface de passage de chaque structure incorporée dans le sens d'écoulement est plus petite que la somme des surfaces des ouvertures, et que les structures incorporées individuelles sont horizontales ou inclinées par rapport à l'horizontale.

2. Lit fluidisé selon la revendication 1, caractérisé en ce que les structures incorporées individuelles sont chaque fois courbées, plissées ou pliées.

3. Lit fluidisé selon la revendication 1 ou 2, caractérisé en ce que les structures incorporées sont composées de plaques perforées et/ou de toiles ou treillis.

4. Lit fluidisé selon l'une des revendications 1 à 3, caractérisé en ce que les structures incorporées recouvrent la totalité ou la majeure partie de la surface de la section du lit fluidisé.

5. Lit fluidisé selon l'une des revendications 1 à 4, caractérisé en ce que les structures incorporées sont réunies en corps réticulaires.

6. Lit fluidisé selon l'une des revendications 1 à 5, caractérisé en ce que les structures incorporées sont fixées sur un cadre de support.

7. Lit fluidisé selon l'une des revendications 1 à 6, caractérisé en ce que les structures incorporées sont garnies de corps de remplissage.

8. Utilisation du lit fluidisé selon l'une ou plusieurs des revendications 1 à 7 pour l'exécution de réactions d'oxydation, de réactions catalytiques et/ou de réactions thermiques entre gaz et solides.

9. Utilisation du lit fluidisé selon la revendication 8 pour l'exécution du procédé de fabrication de charbon actif.

FIG. 1

FIG. 2

FIG. 3

FIG. 4

FIG. 5